# EUROPÄISCHE PATENTSCHRIFT

(11) **EP 3 501 622 B1**
(45) Veröffentlichungstag und Bekanntmachung des Hinweises auf die Patenterteilung: **30.08.2023**
(21) Anmeldenummer: 17400071.1
(22) Anmeldetag: 22.12.2017
(51) Int. Cl.: B01D 53/14

(54) **ABSORBERKOLONNE UND VERFAHREN ZUR REINIGUNG VON ROHSYNTHESEGAS**
ABSORBER COLUMN AND METHOD FOR PURIFYING RAW SYNTHESIS GAS
COLONNE D'ABSORPTION ET PROCÉDÉ D'ÉPURATION DE GAZ DE SYNTHÈSE BRUT

(43) Veröffentlichungstag der Anmeldung: 26.06.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt am Main (DE); Gubrinski, Alfred, 64390 Erzhausen (DE); Jensen, Sandra, 60438 Frankfurt am Main (DE)
(74) Vertreter: Dropsch, Holger

(56) Entgegenhaltungen:
- EP-A1- 2 665 543
- EP-A2- 2 179 777
- WO-A2-2009/158064
- US-A- 4 460 385
- US-A1- 2009 241 773
- US-A1- 2016 311 682

## Beschreibung

### Gebiet der Erfindung

Die Erfindung betrifft eine Absorberkolonne und deren Verwendung zur Abtrennung unerwünschter, insbesondere acider Gasbestandteile, beispielsweise Kohlendioxid und Schwefelwasserstoff, aus einem Rohsynthesegas durch Absorption mit einem Absorptionsmittel, insbesondere bei niedrigen Lastzuständen der Absorberkolonne in Bezug auf die Synthesegasbelastung. Die Erfindung betrifft ferner ein Verfahren zur Herstellung eines Kohlendioxid enthaltenden Reinsynthesegases, das beispielsweise für die Methanolsynthese geeignet ist, aus einem Rohsynthesegas unter Verwendung der erfindungsgemäßen Absorberkolonne.

### Stand der Technik

Verfahren zur Abtrennung von unerwünschten Begleitstoffen aus technischen Rohgasen mittels physikalischer oder chemischer Absorption oder Gaswäsche sind aus dem Stand der Technik wohlbekannt. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS) und Cyanwasserstoff (HCN), von den erwünschten Synthesegasbestandteilen Wasserstoff (H₂) und Kohlenmonoxid (CO) sicher bis in den Spurenbereich entfernt werden. Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abge- , kühltes Methanol als Absorbens oder Waschmittel, wobei in einer Absorberkolonne ein intensiver Stoffaustausch zwischen dem Rohgas und dem Waschmittel bzw. Absorptionsmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen.

Das als Absorptionsmittel verwendete, mit den Störkomponenten beladene Methanol wird im Rectisol-Verfahren über Regenerierungsvorrichtungen im Kreis gefahren. In den Regenerierungsvorrichtungen wird das beladene Methanol von den absorbierten Gasen auf physikalischem Wege befreit. Dabei wird in einem ersten Regenerierungsschritt CO₂ durch Druckentspannung (sogenannte Flashregenerierung) und/oder Strippen mit einem Gas, beispielsweise Stickstoff, aus dem beladenen Methanol-Absorptionsmittel entfernt. In einem weiteren oder alternativen Regenerierungsschritt werden die schwefelhaltigen Gase, COS und H₂S, durch Erhitzen abgetrieben (sogenannte Heissregenerierung). Häufig wird angestrebt, ein möglichst CO₂-freies COS/H₂S-Gas zu erzeugen, da dessen wirtschaftlich interessante Weiterverarbeitung durch eine Vermischung mit COz beeinträchtigt wird.

Beim Rectisol-Verfahren wird zwischen dem Standardverfahren und dem selektiven Rectisol-Verfahren unterschieden. Bei dem Standard-Rectisol-Verfahren werden die Begleitgase COS/H₂S und das CO₂ gemeinsam, in einem Absorptionsschritt aus dem Rohsynthesegas abgetrennt. Dagegen werden bei dem sogenannten selektiven Rectisot-Verfahren die schwefelhaltigen Begleitgase COS/H₂S und das CO₂ jeweils in separaten, nacheinander ablaufenden Absorptionsschritten aus dem Rohsynthesegas abgetrennt. Diese selektive Absorption wird durch geeignete Einstellung der Verfahrensparameter, insbesondere des Mengenverhältnisses von Absorptionsmittel und zu absorbierendem Gas, ermöglicht. Der Vorteil der selektiven Absorption liegt darin, dass das COS/H₂S- und das CO₂-Gas schon bei der Absorption zum größten Teil getrennt gehalten werden und nur der kleinere Teil bei der Regenerierung des Methanols getrennt werden muss. Auf diese Weise wird zudem die Gewinnung des enthaltenen Schwefels mit Hilfe von nachgeschalteten Verfahren wie beispielsweise dem Claus-Verfahren ermöglicht.

Nach Durchlaufen von zumeist mehreren Regenerierungsschritten werden mehrere Teilströme des von den Störkomponenten befreite Absorptionsmittel, beim Rectisol-Verfahren also klassischerweise das Methanol, zu der Absorberkolonne zurückgeführt. Das durch Heissregenerierung regenerierte Absorptionsmittel weist dabei die höchste Reinheit auf und wird daher zur Feinwäsche bzw. Feinabsorption von bereits vorgereinigtem Synthesegas verwendet; es stellt somit die abschließende Waschstufe dar, bevor das gereinigte Synthesegas als Reinsynthesegas die Absorberkolonne üblicherweise an deren oberem Ende verlässt. Das durch Flashregenerierung regenerierte Absorptionsmittel weist eine etwas geringere Reinheit auf und ist insbesondere noch mit . Kohlendioxid teilbeladen. Dieses Absorptionsmittel wird in der sogenannten CO₂-Hauptwäsche eingesetzt, die aus der Perspektive des die Absorberkolonne durchlaufenden Synthesegases stromaufwärts der Feinwäsche angeordnet ist, üblicherweise also unterhalb der Feinwäschestufe.

Wenn das erzeugte Reinsynthesegas für eine nachfolgende Methanolsynthese eingesetzt werden soll, ist die restlose Abtrennung des Kohlendioxids nicht immer erwünscht. Vielmehr wird gefordert, dass das als Feedgas für die Methanolsynthese einzusetzende Reinsynthesegas noch einen bestimmten Anteil an Kohlendioxid, beispielsweise 2 Vol.-%, aufweist. Diesem Erfordernis wird durch entsprechende Auslegung der Absorberkolonne, insbesondere der Waschstufen in dem für die CO₂-Abtrennung selektiven, üblicherweise oberen Kolonnenteil, Rechnung getragen. Allerdings gehen solche Auslegungen von Standardbedingungen insbesondere für die beteiligten Mengenströme des Synthesegases und des Absorptionsmittels aus. Kommt es zu einer Absenkung der Rohsynthesegaszufuhr zu der Absorberkolonne, beispielsweise infolge einer mehrsträngigen Synthesegaserzeugung durch Vergasung oder Reformierung, bei der einzelne Erzeugungsstufen abgeschaltet, sind, so kann die Absorptionsmittelzufuhr nicht im gleichen Maße abgesenkt werden, da ansonsten der hydraulisch stabile Arbeitsbereich der Absorberkolonne verlassen würde. Die somit für den reduzierten Gasdurchsatz zu hohe Absorptionsmittelzufuhr bewirkt dann eine zu starke Abtrennung des Kohlendioxids im Hinblick auf den für die Methanolsynthese erwünschten Gehalt. Als Lösung für diese Problematik wurde eine Bypassleitung vorgeschlagen, mit der ein Anteil des Synthesegases nach Durchlaufen des für die Abtrennung von Schwefelkomponenten selektiven Kolonnenbereichs um die COs-Waschstufen herumgeführt wird, so dass die CO₂-Konzentration im Reinsynthesegas entsprechend eingestellt werden kann. Nachteilig ist dabei jedoch die aufgrund der Führung einer Gasströmung benötigte, große Dimension der Rohrleitungen und Armaturen, beispielsweise der verwendeten Ventile. Es besteht daher Bedarf an einer Alternative zur Einstellung einer definierten CO₂-Konzentration im Reinsynthesegas mit weniger aufwendigen Mitteln, insbesondere bei Niedrig- oder Teillastzuständen der Absorberkolonne im Hinblick auf das zugeführte Rohsynthesegas Zusätzlicher Stand der Technik wird in US 4,460,385 und EP 2665543 B1 offenbart.

### Beschreibung der Erfindung

Aufgabe der Erfindung ist es daher, eine Absorberkolonne, deren Verwendung und ein Verfahren zur Herstellung eines Kohlendioxid enthaltenden Reinsynthesegases mit definiertem Kohlendioxidanteil aus einem Rohsynthesegas zur Verfügung zu stellen, das die oben genannte Alternative bietet. Diese Aufgabe wird im Wesentlichen durch eine Absorberkolonne mit den Merkmalen des Anspruchs 1, durch ihre Verwendung zur Herstellung eines Kohlendioxid enthaltenden Reinsynthesegases mit definiertem Kohlendioxidanteil aus einem Rohsynthesegas gemäß Anspruch 6 ff. und durch das Verfahren gemäß Anspruch 8 ff. gelöst. Weitere, insbesondere bevorzugte Ausgestaltungen der Absorberkolonne, ihrer Verwendung und des Verfahrens finden sich in den jeweiligen ' Unteransprüchen.

### Erfindungsoemäße Absorberkolonne:

Absorberkolonne zur Herstellung eines Reinsynthesegases durch mindestens teilweise Abtrennung von Kohlendioxid und Schwefelverbindungen, insbesondere Schwefelwasserstoff, aus einem Rohsynthesegas, enthaltend Wasserstoff, Kohlenoxide und Schwefelverbindungen, durch Absorption mit einem Absorptionsmittel, wobei die Absorberkolonne folgende Bestandteile und,Baugruppen umfasst:
- einen Mantel, der sich - bezogen auf einen bestimmungsgemäß angeordneten Zustand der Absorberkolonne - entlang einer parallel zur Vertikalen verlaufenden Längsachse erstreckt und der einen Innenraum umschließt, wobei der Innenraum einen oberen und einen unteren Absorptionsbereich umfasst, die jeweils mindestens eine Stoffaustauschzone enthalten, wobei die Stoffaustauschzonen des oberen Absorptionsbereichs überwiegend der Abtrennung von Kohlendioxid dienen und wobei die Stoffaustauschzonen des unteren Absorptionsbereichs überwiegend der Abtrennung von Schwefelverbindüngen dienen,
- einen unterhalb der untersten Stoffaustauschzone des unteren Absorptionsbereichs angeordneten Einlass für das Rohsynthesegas,
- einen an der Oberseite des Mantels angeordneten Auslass für das Reinsynthesegas,
- einen am unteren Ende des oberen Absorptionsbereichs angeordneten Auslass für einen ersten Anteil des beladenen Absorptionsmittels', der mit Kohlendioxid beladen ist,
- eine erste Regenerierungsvorrichtung für die Regenerierung des ersten Anteils des beladenen Absorptionsmittels durch Druckentspannung (Flashregenerierung),
- einen an der Unterseite des Mantels angeordneten Auslass für einen zweiten Anteil des beladenen Absorptionsmittels, der mit Schwefelverbindungen beladen ist,
- eine zweite Regenerierungsvorrichtung für die Regenerierung des zweiten Anteils des beladenen Absorptionsmittels durch Erhitzen (Heissregenerierung),
- einen oberhalb der obersten Stoffaustauschzone des oberen Absorptionsbereichs angeordneten, ersten Absorptionsmitteleinlass für das durch Erhitzen regenerierte Absorptionsmittel, der über eine erste Zuführleitung mit der zweiten Regenerierungsvorrichtung in Fluidverbindung steht,
- einen unterhalb des ersten Absorptionsmitteleinlasses und im oberen Absorptionsbereich angeordneten, zweiten Absorptionsmitteleinlass für das durch Druckentspannung regenerierte Absorptionsmittel, der über eine zweite Zuführleitung mit der ersten Regenerierungsvorrichtung in Fluidverbindung steht,
- eine Verbindungsleitung zwischen der ersten Zuführleitung und der zweiten Zuführleitung, wobei die Verbindungsleitung so ausgestaltet ist, dass ein definierter Anteil des durch Druckentspannung regenerierten Absorptionsmittels zu dem durch Erhitzen regenerierten Absorptionsmittel vor dessen Einleiten in die Absorberkolonne zuführbar ist.

Erfindunasaemäßes Verfahren: Verfahren gemäß dem Anspruch 8 zur Herstellung eines Reinsynthesegases mit definiertem Kohlendioxidanteil aus einem Rohsynthesegas, umfassend folgende Verfahrensschritte:
- Bereitstellen einer Absorberkolonne gemäß Anspruch 1 bis 4,
- Bereitstellen und Einleiten des Rohsynthesegases in die Absorberkolonne,
- Ausleiten des mindestens teilweise von Kohlendioxid und Schwefelverbindungen befreiten Reinsynthesegases mit definiertem Kohlendioxidanteil aus der Absorberkolonne,
- Ausleiten eines ersten Anteils des beladenen Absorptionsmittels, der mit Kohlendioxid beladen ist,
- Einleiten des ersten Anteils des beladenen Absorptionsmittels in die erste Regenerierungsvorrichtung für die Regenerierung durch Druckentspannung (Flashregenerieruhg), Durchführen der Regenerierung durch Druckentspannung, Ausleiten des durch Druckentspannung regenerierten Absorptionsmittels,
- Ausleiten eines zweiten Anteils des beladenen Absorptionsmittels, der mit Schwefelverbindungen beladen ist,
- Einleiten des zweiten Anteils des beladenen Absorptionsmittels in die zweite Regenerierungsvorrichtung für die Regenerierung durch Erhitzen (Heissregenerierung), Durchführen der Regenerierung durch Erhitzen, Ausleiten des durch Erhitzen regenerierten Absorptionsmittels,
- Einleiten des durch Erhitzen regenerierten Absorptionsmittels über den ersten Absorptionsmitteleinlass,
- Einleiten des durch Druckentspannung regenerierten Absorptionsmittels über den zweiten Absorptionsmitteleinlass,
- Zuführen mindestens eines Teils des durch Druckentspannung regenerierten Absorptionsmittels zu dem durch Erhitzen regenerierten Absorptionsmittel vor dessen Einleiten in den oberen Absorptionsbereich über die Verbindungsleitung.

Unter Absorptionsbereich wird ein räumlich abgetrennter bzw. abtrennbarer Bereich oder Abschnitt der Absorberkolonne verstanden, der konstruktiv so ausgestaltet ist, dass in ihm ein signifikanter Stoffübergang aus der Gasphase in das flüssige Absorptionsmittel bezüglich der abzutrennenden Bestandteile des Synthesegases erfolgen kann. Dazu umfasst der Absorptionsbereich eine oder mehrere Stoffaustauschzonen. Diese sind so ausgestaltet, dass durch Vergrößerung der Grenzfläche zwischen dem Gas und dem flüssigen Absorptionsmittel der Stoffübergang zwischen beiden Phasen intensiviert wird. Die Ausgestaltung solcher Stoffaustauschzonen erfolgt daher üblicherweise mittels Böden, beispielsweise mittels Ventilböden oder Glockenböden, oder mittels strukturierter Packungen. Auch Kombinationen dieser Ausgestaltungen sind möglich.

Unter Fluidverbindung zwischen zwei Bereichen wird,jegliche Art von Verbindung verstanden, die es ermöglicht, dass ein Fluid, beispielsweise das flüssige Absorptionsmittel, von dem einen zu dem anderen der beiden Bereiche strömen kann, unbeachtlich etwaiger zwischengeschalteter Bereiche, Bauteile, Armaturen oder Vorrichtungen.

Druckangaben in der Einheit bar(a) beziehen sich auf den Absolutdruck in bar, absolut.

Der Erfindung liegt die Erkenntnis zugrunde, dass eine definierte Konzentration an Kohlendioxid im Reinsynthesegas dadurch bewirkt werden kann, dass dem durch Erhitzen regenerierten Absorptionsmittel, dessen CO₂-Konzentration infolge der Heissregenerierung zu klein ist, um die gewünschte Konzentration an Kohlendioxid im Reinsynthesegas einzustellen, vor dessen Einleiten in die Absorberkolonne über den ersten Absorptionsmitteleinlass, der oberhalb der obersten, der Endreinigung des Synthesegases dienenden Stoffaustauschzone des oberen Absorptionsbereichs angeordnet ist, ein definierter Anteil an dem durch Druckentspannung regenerierten Absorptionsmittel beigemischt wird. Dazu wird eine Verbindungsleitung zwischen der ersten und der zweiten Zuführleitung benötigt, wobei bevorzugt noch in diesem Leitungsweg ein Regelventil angeordnet ist und der Feineinstellung des Absorptionsmittelstroms von der zweiten Zuführleitung (Zuführleitung für das durch Druckentspannung regenerierte Absorptionsmittel) in die erste Zuführleitung (Zuführleitung für das durch Erhitzen regenerierte Absorptionsmittel) dient. Es hat sich herausgestellt, dass die hierfür benötigten Leitungen und Armaturen kleiner und weniger störanfällig sind als diejenigen, die für die Schaltung eines Bypass um die um die CO₂-Ansorptionsstufen herum benötigt werden. Zudem ist die Konzentration an Kohlendioxid im Reinsynthesegas auf die erfindungsgemäße Weise feiner einstellbar als bei Verwendung der Bypassschaltung.

### Bevorzugte Ausgestaltungen der Erfindung

Eine bevorzugte Ausgestaltung der erfindungsgemäßen Absorberkolonne ist dadurch gekennzeichnet, dass die Verbindungsleitung ein Regelventil umfasst. Diese Ausgestaltung ermöglicht es, den Zufluss des durch Druckentspannung regenerierten Absorptionsmittels aus der zweiten Zuführleitung in die erste Zuführleitung präzise zu regeln und somit den Gehalt an Kohlendioxid im Reinsynthesegas präzise einzustellen.

Als besonders vorteilhaft hat es sich herausgestellt, wenn die erste Zuführleitung und/oder die zweite Zuführleitung ein Regelventil umfassen. Diese Ausgestaltung der Absorberkolonne ermöglicht noch weitere Freiheitsgrade bei der Einstellung des Gehalts an Kohlendioxid im Reinsynthesegas und des Mengenstroms des in die Absorberkolonne eingeleiteten Absorptionsmittels.

In bevorzugter Ausgestaltung der Absorberkolonne umfasst diese ferner einen Trennboden, der für aufwärts strömende Gase passierbar, aber für abwärts strömende Flüssigkeiten unpassierbar ist und der unterhalb der oberen Stoffaustauschzone und oberhalb der unteren Stoffaustauschzone angeordnet ist. Auf diese Weise kann das mit Kohlendioxid beladene Absorptionsmittel aufgefangen und aus der Absorberkolonne ausgeleitet werden, um einen Anteil der ersten Regenerierungsvorrichtung zuzuführen und den verbliebenen Anteil nach Abkühlen wieder in die Absorberkolonne, beispielsweise in die untere Stoffaustauschzone, einzuleiten. Als hierbei besonders geeignete Art von Trennböden haben sich Kaminböden erwiesen.

In Weiterbildung der Erfindung steht die erfindungsgemäße Absorberkolonne in Fluidverbindung mit einer Anlage zur katalytischen Methanolsynthese aus Synthesegas. Da mit der erfindungsgemäßen Absorberkolonne die Zusammensetzung des Reinsynthesegases in Hinblick auf seinen Gehalt an Kohlendioxid sehr genau auch bei Teillastbetrieb der Kolonne eingestellt werden kann, weist sie bei Verschaltung mit einer stromwärts nachfolgenden Anlage zur katalytischen Methanolsynthese besondere Vorteile auf. Auf diese Weise kann auch während des Betriebs des Anlagenverbunds aus Absorberkolonne und Anlage zur katalytischen Methanolsynthese die CO₂-Konzentration im Methanolsynthesegas verändert werden, um beispielsweise auf die Desaktivierung der verwendeten Synthesekatalysatoren zu reagieren.

Die Erfindung betrifft auch die Verwendung der erfindungsgemäßen Absorberkolonne zur Herstellung eines Kohlendioxid enthaltenden Reinsynthesegases aus einem Rohsynthesegas: Bevorzugt kann dieses Reinsynthesegas als Einsatzstoff in der Methanol-synthese eingesetzt werden. Durch die Verwendung der erfindungsgemäßen Absorberkolonne kann somit die benötigte Konzentration an Kohlendioxid i im Methanol-Synthesegas präzise eingestellt werden. Dies gilt auch gemäß einer bevorzugten Verwendung bei niedrigen Lastzuständen der Absorberkolonne, also Betriebszuständen mit kleinerer Belastung an Rohsynthesegas als im Normalbetrieb. Es ist auch möglich, ein solches Reinsynthesegas mit definiertem Gehalt an Kohlendioxid als Einsatzstoff in anderen chemischen Synthesen einzusetzen, wie beispielsweise bei der Herstellung von synthetischem Erdgas (SNG) oder bei der Fischer-Tropsch-Synthese.

Eine bevorzugte Ausgestaltung des erfindungsgemäßen Verfahrens zur Herstellung eines Kohlendioxid enthaltenden Reinsynthesegases mit definiertem Gehalt an Kohlendioxid aus einem Rohsynthesegas ist dadurch gekennzeichnet, dass sich die Absorberkolonne in einem Betriebszustand befindet, in dem der Mengenstrom des Rohsynthesegases gegenüber dem Normalbetrieb reduziert ist. Bei diesem Betriebszustand ist wegen des Überschusses des Absorptionsmittels in Bezug auf die nun verringerte Gasbelastung die Entfernung von Kohlendioxid aus dem Synthesegas zu weitgehend, so dass die für die Methanolsynthese geforderte CO₂-Konzentration unterschritten wird. Durch das erfindungsgemäße Zuführen von CO₂-teilbeladenem, aus der Flashregenerierung stammendem Absorptionsmittel zu dem aus der Heissregenerierung stammenden, weitgehend CO₂-freien Absorptionsmittel (Feinwaschmittel) kann die CO₂-Konzentration im Reinsynthesegas wieder auf den geforderten Wert angehoben werden. Somit kann die benötigte Konzentration an Kohlendioxid im Methanol-Synthesegas präzise eingestellt werden.

Eine besonders bevorzugte Ausgestaltung des erfindungsgemäßen Verfahrens ist dadurch gekennzeichnet, dass sich die Absorberkolonne in einem Betriebszustand befindet, in dem der Mengenstrom des Rohsynthesegases gegenüber dem Normalbetrieb soweit reduziert ist, dass sich die Absorberkolonne in der Nähe der unteren Grenze ihres hydraulischen Arbeitsbereichs befindet. Diese ist dadurch definiert, dass es aufgrund der geringen Gasbelastung zu einem unerwünschten Übertritt, einem sogenannten Durchregnen, von Absorptionsmittel von einem Boden auf einen darunterliegenden Boden kommt. Bei diesem Betriebszustand ist wegen des großen Überschusses des Absorptionsmittels in Bezug auf die im Vergleich zu der vorhergehenden Ausgestaltung noch weiter verringerte Gasbelastung die Entfernung von Kohlendioxid aus dem Synthesegas noch weitgehendender, so dass die für die Methanolsynthese geforderte CO₂-Konzentration stark unterschritten wird. Auch hier kann durch das erfindungsgemäße Zuführen von CO₂-teilbeladenem, aus der Flashregenerierung stammendem Absorptionsmittel zu dem aus der Heissregenerierung stammenden, weitgehend CO₂-freien Absorptionsmittel (Feinwaschmittel) die CO₂-Konzentration im Reinsynthesegas wieder auf den geforderten Wert angehoben werden. Somit kann die benötigte Konzentration an Kohlendioxid im Methanol-Synthesegas auch in diesem Betriebsfall präzise eingestellt werden.

Eine weitere besonders bevorzugte Ausgestaltung des erfindungsgemäßen Verfahrens ist dadurch gekennzeichnet, dass sich die Absorberkolonne in einem Betriebszustand befindet, in dem der Mengenstrom des Rohsynthesegases auf 70 % oder weniger, bevorzugt 40 % oder weniger gegenüber demjenigen bei Normalbetrieb reduziert ist. Eine Reduzierung des Mengenstroms des Rohsynthesegases auf 40 oder weniger ergibt einen Betriebszustand der Absorberkolonne, der sich erfahrungsgemäß an der unteren Grenze ihres hydraulischen Arbeitsbereichs befindet. Es gelten daher die Ausführungen bei der Erörterung der vorherigen Ausgestaltung des erfindungsgemäßen Verfahrens: Darüber hinaus ist aber bereits bei Gasbelastungen von 70 % oder weniger gegenüber Normalbetrieb der Absorberkolonne eine deutliche Reduzierung der CO₂-Konzentration im Reinsynthesegas unter auf den geforderten Wert zu beobachten, so dass bereits hier durch das erfindungsgemäße Zuführen von CO₂-teilbeladenem, aus der Flashregenerierung stammendem Absorptionsmittel zu dem aus der Heissregenerierung stammenden, weitgehend CO₂-freien Absorptionsmittel (Feinwaschmittel) die CO₂-Konzentration im Reinsynthesegas wieder auf den geforderten Wert angehoben werden kann.

In einem weiteren Aspekt des erfindungsgemäßen Verfahrens beträgt das Verhältnis der Mengenströme des regenerierten Absorptionsmittels, das durch die Verbindungsleitung strömt, zu demjenigen, das durch die erste Zuführleitung strömt, zwischen 5 und 60 Gew.-%, bevorzugt zwischen 10 und 40 Gew.-%. Bei Berücksichtigung dieser Verhältnisse ist gewährleistet, dass- die CO₂-Konzentration im Reinsynthesegas in den gewünschten Konzentrationsbereichen eingestellt werden kann.

Eine weitere besondere Ausgestaltung des erfindungsgemäßen Verfahrens ist dadurch gekennzeichnet, dass das Verhältnis der Mengenströme des regenerierten Absorptionsmittels, das durch die Verbindungsleitung strömt, zu demjenigen, das durch die erste Zuführleitung strömt, so eingestellt wird, dass der Stoffmengenanteil an Kohlendioxid in dem einer Methanolsynthese zugeführten, gereinigten Synthesegas mindestens 1 mol-%, bevorzugt mindestens 2 mol-% beträgt. Bei entsprechender Einstellung dieser Mengenstrom-Verhältnisse ist gewährleistet, dass die COa-Konzentration im Reinsynthesegas in den für die Methanolsynthese gewünschten Konzentrationsbereichen eingestellt werden kann.

Eine weitere besondere Ausgestaltung des erfindungsgemäßen Verfahrens ist dadurch gekennzeichnet, dass die Temperatur des durch Druckentspannung regenerierten Absorptionsmittels, das durch die Verbindungsleitung strömt, vor der Einleitung in die erste Zuführleitung zwischen - 70 °C und -10 °C, bevorzugt zwischen - 60 °C und - 30°C beträgt. Diese Temperaturen werden durch die adiabate Desorption bei Druckentspannung ohne zusätzliche Kühlung des Absorptionsmittels in Kühlvorrichtungen erreicht. Das auf diese Weise abgekühlte Absorptionsmittel ist direkt in der Absorberkolonne einsetzbar und weist günstige Absorptionseigenschaften auf.

Bevorzugt wird das durch Druckentspannung regenerierte Absorptionsmittel aus einer Reabsorptionsvorrichtung oder einer Mitteldruckflashvorrichtung entnommen, die üblicherweise bei 10 bis 30 bar(a), bevorzugt bei 15 bis 25 bar(a) betrieben wird. Alternativ kann das durch Druckentspannung regenerierte Absorptiönsmittel auch einer Niederdruckflashvorrichtung entnommen werden, die üblicherweise bei 1 bis 3 bar(a), bevorzugt bei 1 bis 2 bar(a) betrieben wird. Die Druckentspannung wird oft mehrstufig in mehreren getrennten Vorrichtung durchgeführt, wobei das aus der Mitteldruckflashvorrichtung nach Druckentspannung ausgeleitete Absorptionsmittel eine Kohlendioxid-Restbeladung aufweist, die es für den erfindungsgemäßen Einsatz geeignet macht. Dasselbe gilt für das aus einer Reabsorptionsvorrichtung gewonnene Absorptionsmittel. Diese stellt beispielsweise im selektiven Rectisol-Verfahren einen der Strippvorrichtung , nachgeschalteten Apparateteil dar und dient der Reabsorption der in unerwünschter Weise äusgestrippten Schwefelverbindungen.

In besonders bevorzugter Ausgestaltung des erfindungsgemäßen Verfahrens enthält das Absorptionsmittel eine oder mehrere Komponenten, die aus der folgenden Gruppe ausgewählt werden: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether. Alle diese Absorptionsmittel dienen der Absorption von Kohlendioxid und Schwefelverbindungen und können mittels Druckentspannung bzw. Heissregenerierung regeneriert werden.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

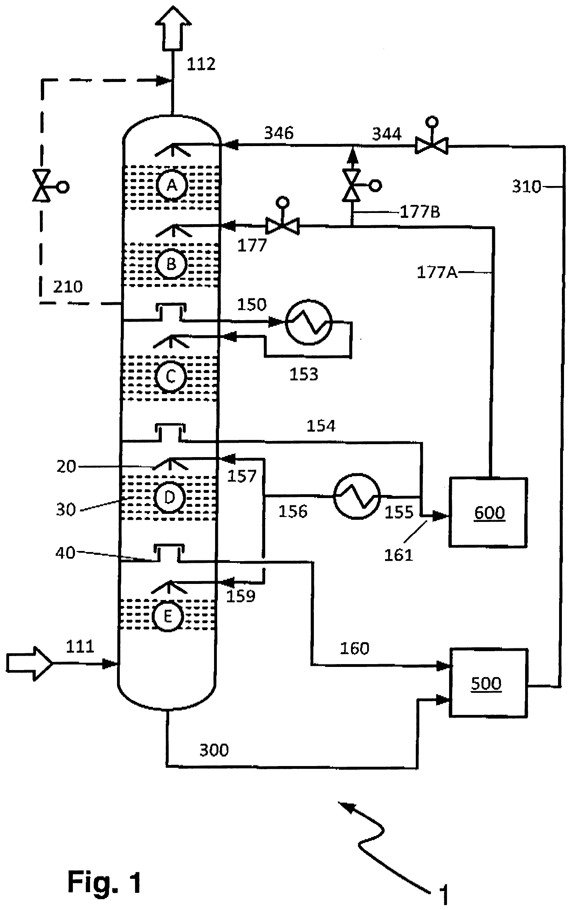

Es zeigt die einzige Figur
- Fig. 1: eine schematische Darstellung einer beispielhaften Ausgestaltung der erfindungsgemäßen Absorberkolonne.

In der in Fig. 1 schematisch dargestellten Ausgestaltung des erfindungsgemäßen Verfahrens, hier als Rectisol-Verfahren, bzw. der erfindungsgemäßen Absorberkolonne wird über Leitung 111 Rohsynthesegas, das durch Reformierung oder Vergasung kohlenstoffhaltiger Einsatzstoffe in einer vorgeschalteten, bildlich nicht dargestellten Synthesegaserzeugungsanlage hergestellt wurde, in die Absorberkolonne 1 eingeleitet. Das Rohsynthesegas enthält dabei neben den erwünschten Synthesegasbestandteilen Wasserstoff und Kohlenmonoxid unter anderem auch die unerwünschten, aciden Synthesegasbestandteile Kohlendioxid und Schwefelwasserstoff sowie weitere organische und anorganische Schwefelverbindungen.

Das in die Absorberkolonne eingeleitete Rohsynthesegas strömt in dieser aufwärts und durchläuft dabei mehrere Stoffaustauschzonen 30 und - für die Gasströmung durchlässige - Trennböden 40, die im dargestellten Beispiel als Kaminböden ausgestaltet sind. (Die Bezugszeichen 20, 30, 40 sind nur exemplarisch für einen Kolonnenbereich, umfassend Flüssigkeitsverteiler 20, Stoffaustauschzone 30 und Trennboden 40 eingetragen.) Die Stoffaustauschzonen sind dabei entweder mit Böden, beispielsweise Glockenböden oder als strukturierte Packungen ausgestaltet. Auch Kombinationen beider Ausgestaltungsformen sind möglich. Nachdem das Rohsynthesegas sämtliche Stoffaustauschzonen passiert hat und dort die unerwünschten Bestandteile, insbesondere Kohlendioxid und Schwefelwasserstoff, durch Stoffaustausch mit dem Absorptionsmittel, im vorliegenden Beispiel Methanol, abgetrennt wurden, verlässt es als Reinsynthesegas über Leitung 112 die Absorberkolonne.

Die in der Absorberkolonne vorhandenen Stoffaustauschzonen haben folgende Aufgaben und Eigenschaften:
Stoffaustauschzone A: CO₂-Feinwäsche. Feinabtrennung von Kohlendioxid bis auf den geforderten Restgehalt. Beaufschlagung mit heissregeneriertem Methanol über Leitungen 310, 344, 346 (erste Zuführleitung).
Stoffaustauschzone B: CO₂-Hauptwäsche. Abtrennung von Kohlendioxid. Beaufschlagung mit durch Druckentspannung regeneriertem (flashregeneriertem) Methanol über Leitungen 177A, 177 (zweite Zuführleitung).
Stoffaustauschzone C: Kühlstufe. Abführung der in den Stoffaustauschzonen D und E freigesetzten Absorptionswärme zur Erhöhung der Absorptionskapazität des Absorptionsmittels.
Stoffaustauschzone D: H₂S-Absorption. Abtrennung von Kohlendioxid. Beaufschlagung mit Methanol, das vom Trennboden der Stoffaustauschzone C über Leitung 154 aüsgeleitet, abgekühlt und über Leitung 156, 157 zu der Absorberkolonne zurückgeführt wurde.
Stoffaustauschzone E: Vorwäsche. Abtrennung von HCN, NH₃ und andere Spurenkomponenten. Beaufschlagung mit Methanol, das vom Trennboden der Stoffaustauschzone C über Leitung 154; ausgeleitet, optional abgekühlt und über Leitung 156, 159 zu der Absorberkolonne zurückgeführt wurde.

Es ist auch möglich, die beschriebene Absorberkolonne zwischen den Stoffaustauschzonen A-B und D-E in zwei einzelne Kolonnen aufzuteilen, von denen die die Stoffaustauschzonen A-B umfassende Kolonne der CO₂-Absorption und die die Stoffaustauschzonen D-E umfassende Kolonne der H₂S-Absorption dient. Auch eine solche geteilte Kolonne soll als Absorberkolonne im Sinne der vorliegenden Erfindung aufgefasst werden.

Derjenige Anteil des Methanols, das vom Trennboden der Stoffaustauschzone C über Leitung 154 ausgeleitet und nicht über Leitungen 156, 157 bzw. 156, 159 zu den Stoffaustauschzonen D und E zurückgeführt wurde, wird über Leitung 161 zu der Flashregenerierungsvorrichtung 600 (erste Regenerierungsvorrichtung) geführt und in diese eingeleitet. Über Leitung 177A wird das durch Flashen regenerierte Absorptionsmittel zur Leitung 177, der zweiten Zuführleitung, geführt und über diese zu der Stoffaustauschzone B zurückgeführt.

Das Sumpfprodukt der Absorberkolonne, also der mit Schwefelkomponenten beladene Methanolstrom, wird über Leitungen 300 und 160 aus der Absorberkolonne ausgeleitet, zu der Heissregenerierungsvorrichtung 500 (zweite Regenerierungsvorrichtung) geführt und in diese eingeleitet. Über Leitungen 310 und 344 wird das durch Erhitzen regenerierte Methanol zur Leitung 346, der ersten Zuführleitung, geführt und über diese zu der Stoffaustauschzone A zurückgeführt.

Die erfindungsgemäß vorgesehene Leitung 177B und das im Leitungsweg befindliche Regelventil ermöglichen die Einstellung eines definierten Zustroms des durch Flashen regenerierten Methanols zu dem durch Heissregenerierung regenerierten Methanolstrom. Hierdurch kann die Kohlendioxid-Konzentration im Reinsynthesegas fein eingestellt werden. Dies ist insbesondere dann vorteilhaft, wenn sich die Absorberkolonne in einem Betriebszustand befindet, in dem der Mengenstrom des Rohsynthesegases auf 70 % oder weniger, bevorzugt 40 % oder weniger gegenüber demjenigen bei Normalbetrieb reduziert ist. Eine Reduzierung des Mengenstroms des Rohsynthesegases auf 40 oder weniger ergibt einen Betriebszustand der Absorberkolonne, der sich erfahrungs. I gemäß an der unteren Grenze ihres hydraulischen Arbeitsbereichs befindet. Darüber hinaus ist aber bereits bei Gasbelastungen von 70 % oder weniger gegenüber Normalbetrieb der Absorberkolonne eine deutliche Reduzierung der CO₂-Konzentration im Reinsynthesegas unter auf den geforderten Wert zu beobachten, so dass bereits hier durch das erfindungsgemäße Zuführen von CO₂-teilbeladenem, aus der Flashregenerierung stammendem Absorptionsmittel zu dem aus der Heissregenerierung stammenden, weitgehend CO₂-freien Absorptionsmittel (Feinwaschmittel) die CO₂-Konzentration im Reinsynthesegas wieder auf den geforderten Wert angehoben werden kann.

Die Einstellung des Mengenstromverhältnisses des regenerierten Methanols, das durch die Verbindungsleitung 177 B strömt, zu demjenigen, das durch die Leitung 344 strömt, die in die erste Zuführleitung 346 einmündet, erfolgt auf Werte zwischen 5 und 60 Gew.-%, bevorzugt zwischen 10 und 40 Gew.-%. Bei Berücksichtigung dieser Verhältnisse ist gewährleistet, dass die CO₂-Konzentration im Reinsynthesegas in den gewünschten Konzentrationsbereichen eingestellt werden kann. Generell gilt, dass das Verhältnis der Mengenströme des regenerierten Absorptionsmittels, das durch die Verbindungsleitung strömt, zu demjenigen, das durch die erste Zuführleiturig strömt, so eingestellt wird, dass der Stoffmengenanteil an Kohlendioxid in dem der Methanolsynthese zugeführten, gereinigten Synthesegas mindestens 1 mol-%, bevorzugt mindestens 2 mol-% beträgt.

Bei entsprechender Einstellung dieser Mengenstrom-Verhältnisse ist gewährleistet, dass die CO₂-Konzentration im Reinsynthesegas in den gewünschten Konzentrations-bereichen eingestellt werden kann und sich das erhaltene Reinsynthesegas für den Einsatz in der Methanolsynthese eignet.

Die Temperatur des durch Flashen regenerierten , Methanols, das durch die Verbindungsleitung 177B strömt, beträgt vor der Einleitung in die erste Zuführleitung 346 zwischen - 70 °C und - 10 °C, bevorzugt zwischen - 60 °C und - 30°C. Diese Temperaturen werden durch die adiabate Desorption bei Druckentspannung ohne zusätzliche Kühlung des Methanols in Kühlvorrichtungen erreicht. Das auf diese Weise abgekühlte Methanol ist direkt in der Absorberkolonne einsetzbar und weist günstige Absorptionseigenschaften auf.

In Fig. 1 ist zum Vergleich auch die bisherige, nicht erfindungsgemäße Vorgehensweise zur Einstellung der Kohlendioxid-Konzentration im Reinsynthesegas mittels der gestrichelt dargestellten Leitung 210 und des in diesem Leitungsweg befindlichen Regelventils gezeigt. Nachteilig ist dabei jedoch die aufgrund der Führung einer Gasströmung benötigte, große Dimension der Rohrleitung 210 und des Ventils. Letzteres ist erfahrungsgemäß auch störanfälliger als das erfindungsgemäße Flüssigkeitsregelventil im Leitungsweg 177B.

Die in Fig. 1 gezeigten Vorrichtungen zur Heissregenerierung 500 bzw. Flashregenerierung 600 sind nur schematisch als Funktionsblöcke dargestellt. Ihre genaue Ausgestaltung ist dem Fachmann an sich bekannt. Insbesondere kann die Vorrichtung zur Flashregenerierung 600 mehrere Entspannungsstufen bzw. Teilvorrichtungen auf unterschiedlichen Druckniveaus umfassen, darunter auch eine Mitteldruckflashvorrichtung.

### Zahlenbeispiele

In den nachfolgend wiedergegebenen Tabellen werden die wichtigsten physikalischen Parameter und die Zusammensetzungen (Molenbrüche) für die in Fig. 1 bezeichneten Eintritts- und Äustrittströme für jeweils drei Betriebszustände der Absorberkolonne gemäß des oben erörterten Ausführungsbeispiels (Rectisol-Verfahren) wiedergegeben:
Normallast (Vergleichsbeispiel): Betrieb der Absorberkolonne bei Normalwerten (Auslegungswerten) der Gas- und Flüssigkeitsbelastung.

Niederlast (Vergleichsbeispiel); Betrieb der Absorberkolonne bei Normalwerten der Flüssigkeitsbelastung, aber stark reduzierter Gasbelastung am unteren Ende des hydraulischen Arbeitsbereichs.

Erfindung: Betrieb der Absorberkolonne bei Normalwerten der Flüssigkeitsbelastung und stark reduzierter Gasbelastung, aber mit Zuführen des durch Flashen regenerierten Methanols über Leitung 177B zudem durch Heissregenerierung regenerierten und über Leitungen 310 und 344 herangeführten Methanolstrom. Deutlich erkennbar ist das Ansteigen der CO₂-Konzentration von Null (Vergleichsbeispiel) auf ca. 3,9 mol-% (Erfindung) in der ersten Zuführleitung 346 und von 0,4 auf ca. 2,0 mol-% im Reinsynthesegas in Leitung 112.

### Gewerbliche Anwendbarkeit

Mit der Erfindung wird eine Verbesserung von bewährten Verfahren zur Reinigung von Rohsynthesegas in Absorberkolonnen zur Verfügung gestellt, die es ermöglicht, insbesondere auch bei geringer Gasbelastung der Kolonne eine definierte CO₂-Konzentration im Reinsynthesegas sicher und effizient einzustellen.

### Bezugszeichenliste

- 1: Absorberkolonne
- 20: Flüssigkeitsverteiler
- 30: Stoffaustauschzone
- 40: Trennboden, z. B. Kaminboden
- 111: Leitung (Rohsynthesegas) •
- 112: Leitung (Reinsynthesegas)
- 150: Leitung
- 153 - 157: Leitung
- 159 - 161: Leitung
- 177, 177A, 177B: Leitung
- 210: Leitung (Bypass)
- 300, 310: Leitung
- 344, 346: Leitung
- 500: Heissregenerierungsvorrichtung
- 600: Flashregenerierungsvorrichtung

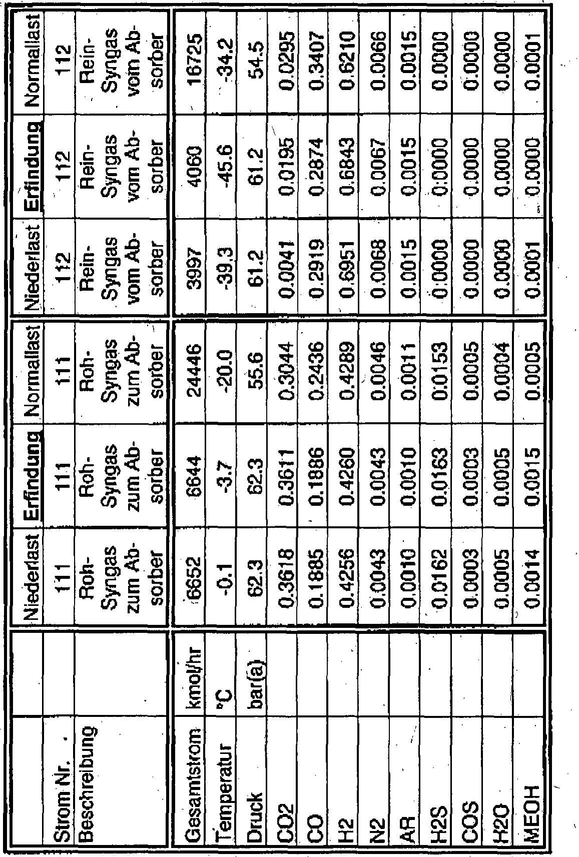

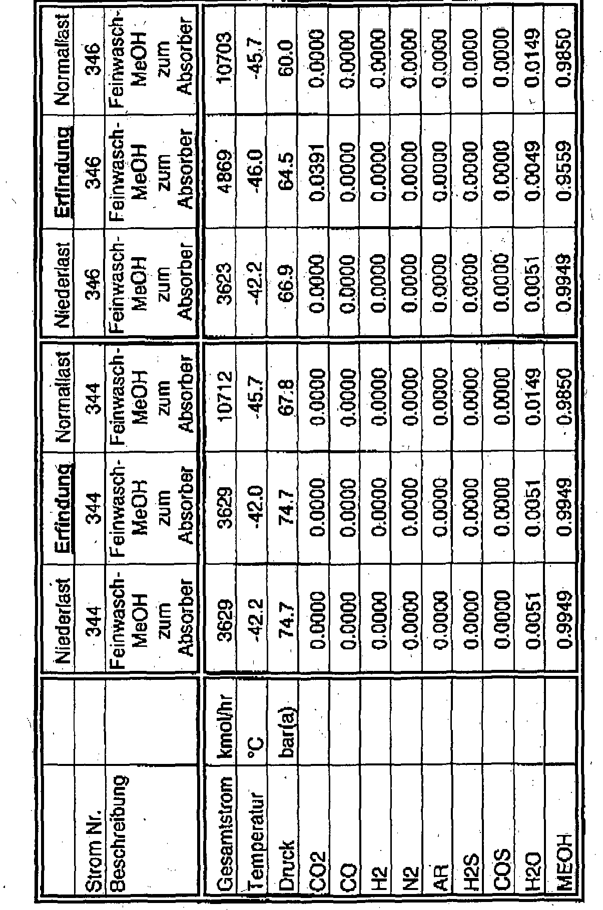

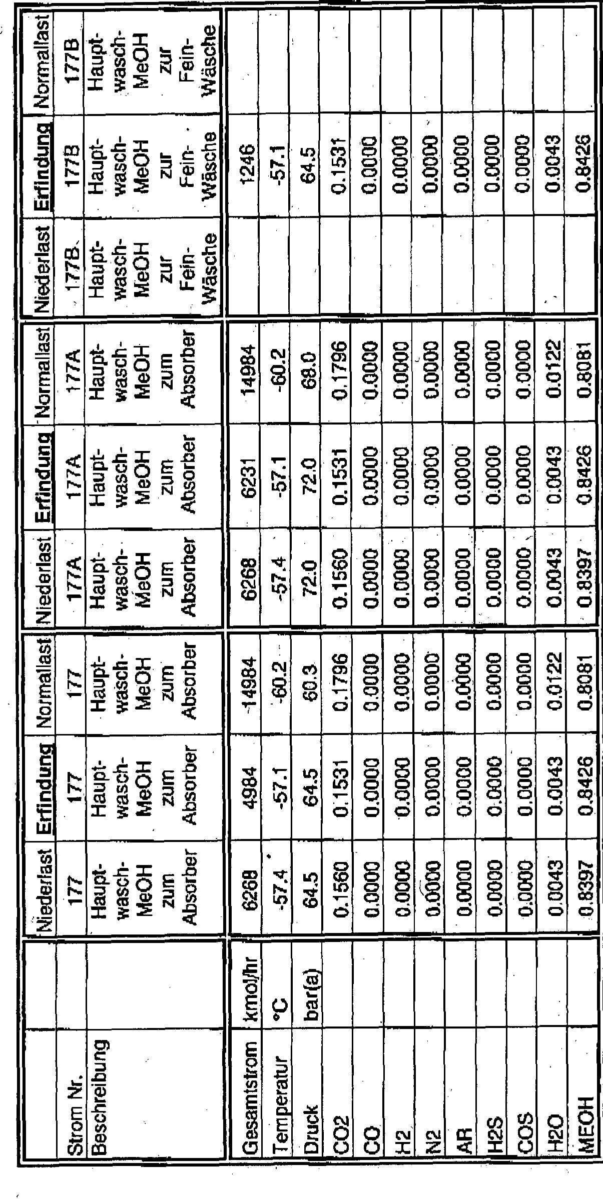

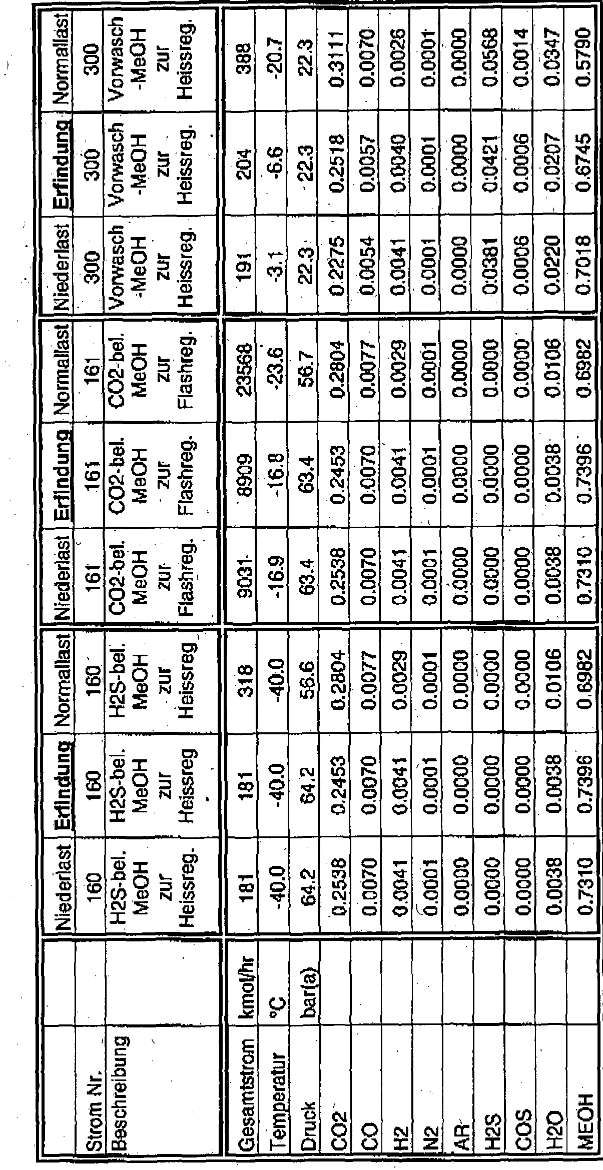

## Patentansprüche

1. Absorberkolonne zur Herstellung eines Reinsynthesegases durch mindestens teilweise Abtrennung von Kohlendioxid und Schwefelverbindungen, insbesondere Schwefelwasserstoff, aus einem Rohsynthesegas, enthaltend Wasserstoff, Kohlenoxide und Schwefelverbindungen, durch Absorption mit einem Absorptionsmittel, wobei die Absorberkolonne folgende Bestandteile und Baugruppen umfasst:
- einen Mantel, der sich - bezogen auf einen bestimmungsgemäß angeordneten Zustand der Absorberkolonne - entlang einer parallel zur Vertikalen verlaufenden Längsachse erstreckt und der einen Innenraum umschließt, wobei der Innenraum einen oberen und einen unteren Absorptionsbereich umfasst, die jeweils mindestens eine Stoffaustauschzone enthalten, wobei die Stoffaustauschzonen des oberen Absorptionsbereichs überwiegend der Abtrennung von Kohlendioxid dienen und wobei die Stoffaustauschzonen des unteren Absorptionsbereichs überwiegend der Abtrennung von Schwefelverbindungen dienen,
- einen unterhalb der untersten Stoffaustauschzone des unteren Absorptionsbereichs angeordneten Einlass für das Rohsynthesegas,
- einen an der Oberseite des Mantels angeordneten Auslass für das Reinsynthesegas,
- einen am unteren Ende des oberen Absorptionsbereichs angeordneten Auslass für einen ersten Anteil des beladenen Absorptionsmittels, der mit Kohlendioxid beladen ist,
- eine erste Regenerierungsvorrichtung für die Regenerierung des ersten Anteils des beladenen Absorptionsmittels durch Druckentspannung (Flashregenerierung),
- einen an der Unterseite des Mantels angeordneten Auslass für einen zweiten Anteil des beladenen Absorptionsmittels, der mit Schwefelverbindungen beladen ist,
- eine zweite Regenerierungsvorrichtung für die Regenerierung des zweiten Anteils des beladenen Absorptionsmittels durch Erhitzen (Heissregenerierung),
- einen oberhalb der obersten Stoffaustauschzone des oberen Absorptionsbereichs angeordneten, ersten Absorptionsmitteleinlass für das durch Erhitzen regenerierte Absorptionsmittel, der über eine erste Zuführleitung mit der zweiten Regenerierungsvorrichtung in Fluidverbindung steht,
- einen unterhalb des ersten Absorptionsmitteleinlasses und im oberen Absorptionsbereich angeordneten, zweiten Absorptionsmitteleinlass für das durch Druckentspannung regenerierte Absorptionsmittel, der über eine zweite Zuführleitung mit der ersten Regenerierungsvorrichtung in Fluidverbindung steht,
- eine Verbindungsleitung zwischen der ersten Zuführleitung und der zweiten Zuführleitung, wobei die Verbindungsleitung so ausgestaltet ist, dass ein definierter Anteil des durch Druckentspannung regenerierten Absorptionsmittels zu dem durch Erhitzen regenerierten Absorptionsmittel vor dessen Einleiten in die Absorberkolonne zuführbar ist.

2. Absorberkolonne gemäß Anspruch 1, **dadurch gekennzeichnet, dass** die Verbindungsleitung ein Regelventil umfasst.

3. Absorberkolonne gemäß Anspruch 1 oder 2, **dadurch gekennzeichnet, dass** die erste Zuführleitung und/oder die zweite Zuführleitung ein Regelventil umfassen.

4. Absorberkolonne gemäß Anspruch 1 bis 3, ferner umfassend einen Trennboden, vorzugsweise einen Kaminboden, der für aufwärts strömende Gase passierbar, aber für abwärts strömende Flüssigkeiten unpassierbar ist und der unterhalb der oberen Stoffaustauschzone und oberhalb der unteren Stoffaustauschzone angeordnet ist.

5. Absorberkolonne gemäß eines der vorigen Ansprüche, ferner umfassend Mittel zur Herstellung einer Fluidverbindung mit einer Anlage zur katalytischen Methanolsynthese aus Synthesegas.

6. Verwendung einer Absorberkolonne gemäß Anspruch 1 bis 5 zur Herstellung eines Kohlendioxid enthaltenden Reinsynthesegases, vorzugsweise für die Methanolsynthese, aus einem Rohsynthesegas.

7. Verwendung gemäß Anspruch 6, **dadurch gekennzeichnet, dass** sich die Absorberkolonne in einem Betriebszustand befindet, in dem der Mengenstrom des Rohsynthesegases gegenüber dem Normalbetrieb reduziert ist.

8. Verfahren zur Herstellung eines Reinsynthesegases mit definiertem Kohlendioxidanteil aus einem Rohsynthesegas, umfassend folgende Verfahrensschritte:
- Bereitstellen einer Absorberkolonne gemäß Anspruch 1 bis 5,
- Bereitstellen und Einleiten des Rohsynthesegases in die Absorberkolonne,
- Ausleiten des mindestens teilweise von Kohlendioxid und Schwefelverbindungen befreiten Reinsynthesegases mit definiertem Kohlendioxidanteil aus der Absorberkolonne,
- Ausleiten eines ersten Anteils des beladenen Absorptionsmittels, der mit Kohlendioxid beladen ist,
- Einleiten des ersten Anteils des beladenen Absorptionsmittels in die erste Regenerierungsvorrichtung für die Regenerierung durch Druckentspannung (Flashregenerierung), Durchführen der Regenerierung durch Druckentspannung, Ausleiten des durch Druckentspannung regenerierten Absorptionsmittels,
- Ausleiten eines zweiten Anteils des beladenen Absorptionsmittels, der mit Schwefelverbindungen beladen ist,
- Einleiten des zweiten Anteils des beladenen Absorptionsmittels in die zweite Regenerierungsvorrichtung für die Regenerierung durch Erhitzen (Heissregenerierung), Durchführen der Regenerierung durch Erhitzen, Ausleiten des durch Erhitzen regenerierten Absorptionsmittels,
- Einleiten des durch Erhitzen regenerierten Absorptionsmittels in den oberen Absorptionsbereich über den ersten Absorptionsmitteleinlass,
- Einleiten des durch Druckentspannung regenerierten Absorptionsmittels in oberen Absorptionsbereich über den zweiten Absorptionsmitteleinlass,
- Zuführen mindestens eines Teils des durch Druckentspannung regenerierten Absorptionsmittels zu dem durch Erhitzen regenerierten Absorptionsmittel vor dessen Einleiten in den oberen Absorptionsbereich über die Verbindungsleitung.

9. Verfahren gemäß Anspruch 8, **dadurch gekennzeichnet, dass** sich die Absorberkolonne in einem Betriebszustand befindet, in dem der Mengenstrom des Rohsynthesegases gegenüber dem Normalbetrieb reduziert ist.

10. Verfahren gemäß Anspruch 9, **dadurch gekennzeichnet, dass** sich die Absorberkolonne in einem Betriebszustand befindet, in dem der Mengenstrom des Rohsynthesegases gegenüber dem Normalbetrieb soweit reduziert ist, dass sich die Absorberkolonne in der Nähe der unteren Grenze ihres hydraulischen Arbeitsbereichs befindet.

11. Verfahren gemäß Anspruch 9 oder 10, **dadurch gekennzeichnet, dass** sich die Absorberkolonne in einem Betriebszustand befindet, in dem der Mengenstrom des Rohsynthesegases auf 70 % oder weniger, bevorzugt 40 % oder weniger gegenüber demjenigen bei Normalbetrieb reduziert ist.

12. Verfahren gemäß eines der vorigen Ansprüche, **dadurch gekennzeichnet, dass** das Verhältnis der Mengenströme des regenerierten Absorptionsmittels, das durch die Verbindungsleitung strömt, zu demjenigen, das durch die erste Zuführleitung strömt, zwischen 5 und 60 Gew.-%, bevorzugt zwischen 10 und 40 Gew.-% beträgt.

13. Verfahren gemäß eines der vorigen Ansprüche, **dadurch gekennzeichnet, dass** das Verhältnis der Mengenströme des regenerierten Absorptionsmittels, das durch die Verbindungsleitung strömt, zu demjenigen, das durch die erste Zuführleitung strömt, so eingestellt wird, dass der Stoffmengenanteil an Kohlendioxid in dem einer Methanolsynthese zugeführten, gereinigten Synthesegas mindestens 1 mol-%, bevorzugt mindestens 2 mol-% beträgt.

14. Verfahren gemäß eines der vorigen Ansprüche, **dadurch gekennzeichnet, dass** die Temperatur des durch Druckentspannung regenerierten Absorptionsmittels, das durch die Verbindungsleitung strömt, vor der Einleitung in die erste Zuführleitung zwischen - 70 °C und - 10 °C, bevorzugt zwischen - 60 °C und - 30°C beträgt.

15. Verfahren gemäß eines der vorigen Ansprüche, **dadurch gekennzeichnet, dass** das durch Druckentspannung regenerierte Absorptionsmittel aus einer Reabsorptionsvorrichtung, einer Mitteldruckflashvorrichtung oder einer Niederdruckflashvorrichtung entnommen wird.

16. Verfahren gemäß eines der vorigen Ansprüche, **dadurch gekennzeichnet, dass** das Absorptionsmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycoldialkylether, vorzugsweise Polyethylenglycol-dimethylether.

## Claims

1. Absorber column for production of a clean synthesis gas by at least partial separation of carbon dioxide and sulfur compounds, especially hydrogen sulfide, from a crude synthesis gas comprising hydrogen, carbon oxides and sulfur compounds, by absorbing with an absorbent, wherein the absorber column comprises the following constituents and assemblies:
- a shell which - based on a state of the absorber column arranged as intended - extends along a longitudinal axis that runs parallel to the vertical and encloses an inner space, wherein the inner space comprises an upper absorption region and a lower absorption region, each of which contains at least one mass transfer zone, wherein the mass transfer zones of the upper absorption region serve predominantly for removal of carbon dioxide and wherein the mass transfer zones of the lower absorption region serve predominantly for removal of sulfur compounds,
- an inlet disposed below the lowermost mass transfer zone of the lower absorption region for the crude synthesis gas,
- an outlet disposed at the top end of the shell for the clean synthesis gas,
- an outlet disposed at the lower end of the upper absorption region for a first fraction of the laden absorbent laden with carbon dioxide,
- a first regeneration apparatus for the regeneration of the first fraction of the laden absorbent by expansion (flash regeneration),
- an outlet disposed at the bottom end of the shell for a second fraction of the laden absorbent laden with sulfur compounds,
- a second regeneration apparatus for the regeneration of the second fraction of the laden absorbent by heating (hot regeneration),
- a first absorbent inlet disposed above the uppermost mass transfer zone of the upper absorption region for the absorbent regenerated by heating, which is in fluid connection with the second regeneration apparatus via a first feed conduit,
- a second absorbent inlet disposed below the first absorbent inlet and within the upper absorption region for the absorbent regenerated by expansion, which is in fluid connection with the first regeneration apparatus via a second feed conduit,
- a connecting conduit between the first feed conduit and the second feed conduit, where the connecting conduit is configured such that a defined proportion of the absorbent regenerated by expansion can be fed into the absorbent regenerated by heating before it is introduced into the absorber column.

2. Absorber column according to Claim 1, **characterized in that** the connecting conduit comprises a controller valve.

3. Absorber column according to Claim 1 or 2, **characterized in that** the first feed conduit and/or the second feed conduit comprise(s) a controller valve.

4. Absorber column according to Claim 1 to 3, further comprising a separating tray, preferably a chimney tray, which is passable to gases flowing upward but impassable to liquids flowing downward and which is disposed below the upper mass transfer zone and above the lower mass transfer zone.

5. Absorber column according to any of the preceding claims, further comprising means of establishing a fluid connection to a plant for catalytic methanol synthesis from synthesis gas.

6. Use of an absorber column according to Claims 1 to 5 for production of a clean synthesis gas comprising carbon dioxide, preferably for methanol synthesis, from a crude synthesis gas.

7. Use according to Claim 6, **characterized in that** the absorber column is in a state of operation in which the flow rate of the crude synthesis gas is reduced compared to normal operation.

8. Process for producing a clean synthesis gas with a defined carbon dioxide content from a crude synthesis gas, comprising the following process steps:
- providing an absorber column according to Claims 1 to 5,
- providing and introducing the crude synthesis gas into the absorber column,
- discharging the clean synthesis gas that has been at least partly freed of carbon dioxide and sulfur compounds and has a defined carbon dioxide content from the absorber column,
- discharging a first fraction of the laden absorbent laden with carbon dioxide,
- introducing the first fraction of the laden absorbent into the first regeneration apparatus for the regeneration : by expansion (flash regeneration), conducting the regeneration by expansion, discharging the absorbent regenerated by expansion,
- discharging a second fraction of the laden absorbent laden with sulfur compounds,
- introducing the second fraction of the laden absorbent into the second regeneration apparatus for regeneration by heating (hot regeneration), conducting regeneration by heating, discharging the absorbent regenerated by heating,
- introducing the absorbent regenerated by heating into the upper absorption region via the first absorbent inlet,
- introducing the absorbent regenerated by expansion into the upper absorption region via the second absorbent inlet,
- feeding at least a portion of the absorbent regenerated by expansion into the absorbent regenerated by heating prior to introduction thereof into the upper absorption region via the connecting conduit.

9. Process according to Claim 8, **characterized in that** the absorber column is in a state of operation in which the flow rate of the crude synthesis gas is reduced compared to standard operation.

10. Process according to Claim 9, **characterized in that** the absorber column is in a state of operation in which the flow rate of the crude synthesis gas is reduced compared to standard operation to such an extent that the absorber column is close to the lower limit of its hydraulic working range.

11. Process according to Claim 9 or 10, **characterized in that** the absorber column is in a state of operation in which the flow rate of the crude synthesis gas is reduced to 70% or less, preferably 40% or less, compared to that in standard operation.

12. Process according to any of the preceding claims, **characterized in that** the ratio of the flow rate of the regenerated absorbent that flows through the connecting conduit to that which flows through the first feed conduit is between 5% and 60% by weight, preferably between 10% and 40% by weight.

13. Process according to any of the preceding claims, **characterized in that** the ratio of the flow rates of regenerated absorbent that flows through the connecting conduit compared to that which flows through the first feed conduit is adjusted such that the molar proportion of carbon dioxide in the cleaned synthesis gas fed to a methanol synthesis is at least 1 mol%, preferably at least 2 mol%.

14. Process according to any of the preceding claims, **characterized in that** the temperature of the absorbent regenerated by expansion that flows through the connecting conduit, prior to introduction into the first i feed conduit,; is between -70°C and -10°C, preferably between -60°G and -30°C.

15. Process according to any of the preceding claims, **characterized in that** the absorbent regenerated by expansion is taken from a reabsorption apparatus, a medium-pressure flash apparatus or a low-pressure flash apparatus.

16. Process according to any of the preceding claims, **characterized in that** the absorbent comprises one or more components selected from the following group: methanol, N-methylpyrrolidone (NMP), secondary amines, preferably diethanolamine, tertiary amines, preferably methyldiethanodamine, polyethylene glycol dialkyl ethers, preferably polyethylene glycol dimethyl ether.

## Revendications

1. Colonne d'absorption pour fabriquer un gaz de synthèse pur par une séparation au moins partielle de dioxyde de carbone et de composés du soufre, en particulier l'hydrogène sulfuré, à partir d'un gaz de synthèse brut contenant de l'hydrogène, des oxydes de carbone et des composés du soufre, par absorption à l'aide d'un , absorbant, la colonne d'absorption comprenant les composants et constituants suivants :
- une calandre qui, pour un état conformément agencé de la colonne d'absorption, s'étend le long d'un axe longitudinal courant parallèlement à la verticale, et qui comprend un espace intérieur, l'espace intérieur comprenant une zone d'absorption supérieure et une zone d'absorption inférieure, dont chacune contient au moins une zone de transfert de masse, les zones de transfert de masse de la zone d'absorption supérieure servant essentiellement à la séparation du dioxyde de carbone et les zones de transfert de masse de la zone d'absorption inférieure servant essentiellement à la séparation de composés du soufre,
- une entrée pour le gaz de synthèse brut, disposée en dessous de la zone de transfert de masse la plus inférieure de la zone d'absorption inférieure,
- une sortie pour le gaz de synthèse pur, disposée sur la face supérieure de la calandre,
- une sortie; pour une première proportion de l'absorbant chargé, qui est chargé en dioxyde de carbone, disposée à l'extrémité inférieure de la zone d'absorption supérieure,
- un premier dispositif de régénération pour la régénération par détente (régénération éclair) de la première proportion de l'absorbant chargé,
- une sortie pour la seconde proportion de l'absorbant chargé, qui est chargé en composés du soufre, disposée sur la face inférieure de la calandre,
- un second dispositif de régénération pour la régénération par chauffage (régénération à chaud) de la seconde proportion de l'absorbant chargé,
- une première entrée d'absorbant, disposée au-dessus de la zone de transfert de masse la plus supérieure de la zone d'absorption supérieure, pour l'absorbant régénéré par chauffage, qui est en liaison fluidique par l'intermédiaire d'une première conduite d'amenée avec le second dispositif de régénération,
- une seconde entrée d'absorbant, disposée en dessous de la première entrée d'absorbant et dans la zone d'absorption supérieure, pour l'absorbant régénéré par détente, qui est en liaison fluidique par une deuxième conduite d'amenée avec le premier dispositif de régénération,
- une conduite de liaison entre la première conduite d'amenée et la seconde conduite d'amenée, la conduite de liaison étant conçue de façon qu'une proportion définie de l'absorbant régénéré par détente puisse être envoyée à l'absorbant régénéré par chauffage, avant son introduction dans la colonne d'absorption.

2. Colonne d'absorption selon la revendication 1, **caractérisée en ce que** la conduite de liaison comprend une vanne de commande.

3. Colonne d'absorption selon la revendication 1 ou 2, **caractérisée en ce que** la première conduite d'amenée et/ou la seconde conduite d'amenée comprennent une vanne de commande.

4. Colonne d'absorption selon les revendications 1 à 3, comprenant en outre un plateau séparateur, de préférence un plateau à cheminée, qui peut être traversé par des gaz s'écoulant vers le haut, mais qui ne peut pas être traversé par des liquides s'écoulant vers le bas, et qui est disposé en dessous de la zone de transfert de masse supérieure et au-dessus de la zone de transfert de masse inférieure.

5. Colonne d'absorption selon l'une des revendications, précédentes, comprenant en outre des moyens pour fabriquer une liaison fluidique avec une installation de synthèse catalytique de méthanol à partir de gaz de synthèse.

6. Utilisation d'une colonne d'absorption selon les revendications 1 à 5 pour fabriquer un gaz de synthèse contenant du dioxyde de carbone, de préférence pour la synthèse du méthanol, à partir d'un gaz de synthèse.

7. Utilisation selon la revendication 6, **caractérisée en ce que** la colonne d'absorption se trouve dans un état de marche dans lequel le débit massique du gaz de synthèse brut est réduit par rapport à la marche normale.

8. Procédé de fabrication d'un gaz de synthèse pur ayant une proportion définie de dioxyde de carbone, à partir 'un gaz de synthèse pur, comprenant les étapes suivantes :
- fourniture d'une colonne d'absorption selon les revendications 1 à 5,
- fourniture et introduction du gaz de synthèse brut dans la colonne d'absorption,
- évacuation, de la colonne d'absorption, du gaz de synthèse pur au moins partiellement débarrassé du dioxyde de carbone et des composés du soufre, ayant une proportion définie de dioxyde de carbone,
- évacuation d'une première proportion de l'absorbant chargé, qui est chargé en dioxyde de carbone,
- introduction de la première proportion de l'absorbant chargé dans le premier dispositif de régénération pour la régénération par détente (régénération éclair), mise en oeuvre de la régénération par détente, évacuation de l'absorbant régénéré par détente,
- évacuation d'une seconde proportion de l'absorbant chargé, qui est chargé en des composés du soufre,
- introduction de la seconde proportion de l'absorbant chargé dans le second dispositif de régénération pour la régénération par chauffage (régénération à chaud), mise en œuvre de la régénération par chauffage, évacuation de l'absorbant régénéré par chauffage,
- introduction de l'absorbant régénéré par chauffage dans la zone d'absorption supérieure par la première entrée d'absorbant,
- introduction de l'absorbant régénéré par détente dans la zone d'absorption supérieure par la seconde entrée d'absorbant,
- amenée d'au moins une partie de l'absorbant régénéré par détente à l'absorbant régénéré par chauffage avant son introduction dans la zone d'absorption supérieure par la conduite de liaison.

9. Procédé selon la revendication 8, **caractérisé en ce que** la colonne d'absorption se trouve dans un état de marche dans lequel le débit massique du gaz de synthèse brut est réduit par rapport à la marche normale.

10. Procédé selon la revendication 9, **caractérisé en ce que** la colonne d'absorption se trouve dans un état de marche dans lequel le débit massique du gaz de synthèse brut est réduit par rapport à la marche normale au point que la colonne d'absorption se trouve au voisinage de la limite inférieure de sa zone de travail hydraulique.

11. Procédé selon la revendication 9 ou 10, **caractérisé en ce que** la colonne d'absorption se trouve dans un état de marche dans lequel le débit massique du gaz de synthèse brut est réduit à 70 % ou moins, de préférence à 40 % ou moins, par rapport à celui correspondant à une marche normale.

12. Procédé selon l'une des revendications précédentes, **caractérisé en ce que** le rapport entre les débits massiques de l'absorbant régénéré qui s'écoule par la conduite de liaison et celui qui s'écoule par la première conduite d'amenée est compris entre 5 et 60 % en poids, de préférence entre 10 et 40 % en poids.

13. Procédé selon l'une des revendications précédentes, **caractérisé en ce que** le rapport entre les débits de l'absorbant régénéré qui s'écoule par la conduite de liaison et celui qui s'écoule par la première conduite d'amenée est ajusté de telle sorte que la proportion en masse du dioxyde de carbone dans le gaz de synthèse purifié, amené à une synthèse du méthanol, est d'au moins 1 % en moles, de préférence d'au moins 2 % en moles.

14. Procédé selon l'une des revendications précédentes, **caractérisé en ce que** la température de l'absorbant régénéré par détente, qui s'écoule par la conduite de liaison, est, avant introduction dans la première conduite d'amenée, comprise entre -70 °C et - 10 °C, de préférence entre -60 °C et -30 °C.

15. Procédé selon l'une des revendications précédentes, **caractérisé en ce que** l'absorbant régénéré par détente est soutiré d'un dispositif de réabsorption, d'un dispositif éclair moyenne pression ou d'un dispositif éclair basse pression.

16. Procédé selon l'une des revendications précédentes, **caractérisé en ce que** l'absorbant contient un ou plusieurs composants choisis dans le groupe suivant : méthanol, N-méthylpyrrolidone (NMP), amines secondaires, de préférence diéthanolamine, amines tertiaires, de préférence méthyldiéthanolamine, éthers dialkyliques du polyéthylèneglycol, de préférence éther diméthylique du polyéthylèneglycol.
